# EUROPEAN PATENT APPLICATION

(11) **EP 1 163 962 A2**
(43) Date of publication of application: **19.12.2001**
(21) Application number: 01112031.8
(22) Date of filing: 23.05.2001
(51) Int. Cl.: B21D 43/00, B21D 43/28

(54) **Bar loading magazine for feeding cropping machines and the like**

(30) Priority: 29.05.2000 IT MI001187
(71) Applicant: Priuli, Dante Bruno, 25047 Darfo Boario Terme (Prov. of Brescia) (IT)
(72) Inventor: Priuli, Dante Bruno, 25047 Darfo Boario Terme (Prov. of Brescia) (IT)
(74) Representative: Modiano, Guido, Dr.-Ing.

(57) **Abstract**

A bar loading magazine (1), particularly for feeding cropping machines arranged downstream of the magazine, comprising a supporting element (2) which is divided into a plurality of loading compartments (3), the loading compartments (3) being provided with supporting elements (5) for the bars (4) which have lifting elements (6) for maintaining the supporting elements (5) at a height, inside the compartment (3), which allows the operator to easily access the bars (4) supported by the supporting elements (5), as the bars (4) are gradually unloaded from the supporting elements (5).

## Description

The present invention relates to a bar loading magazine for feeding cropping machines and the like. More particularly, the invention relates to a magazine for loading bars which must then be fed substantially continuously to cropping machines and the like.

It is known that machines for bar cropping, bending and the like are fed with said bars, which are taken from a magazine being located upstream of the machine and loaded in each instance with the bars to be processed.

Known types of magazine are generally constituted by a substantially rectangular supporting element being divided into a plurality of channels along which the bars to be sent to the machine arranged downstream of the magazine are loaded.

The bars can be fed, i.e., taken from the magazine, by extracting them from the magazine or by subjecting the magazine to a translational motion transversely to the bar advancement direction and therefore with respect to the machine arranged downstream, or by making the bars fall toward a central region of the magazine and therefore extracting them centrally by means of rollers, but it any case the quantity of bars that can be loaded into the respective compartments of the magazine is limited by the fact that the operator, as the bars are fed to the machine and therefore used, is no longer able to easily make contact with the bars loaded into the compartments, even if he leans as much as possible into said compartments.

The decrease in the number of bars, as they are fed, lowers the stack of bars considerably and therefore the operator is no longer able to make contact with said bars.

Accordingly, the number of bars present in each compartment and the height at which they remain within the compartment must be selected so that the operator can always make contact with said bars, even when they are fed gradually to the machine arranged downstream.

This clearly limits the number of bars that can be loaded into the respective compartments of the magazine and accordingly forces constant topping-up of the bars in the magazine, inducing machine downtimes and therefore increasing costs and reducing production.

Another drawback suffered by known types of magazine is that they cannot be soundproofed, indeed because of the need to continuously load the bars in the magazine.

Bar loading magazines are in fact a source of considerable noise, since the extraction of the bars and their transfer toward the cropping machines arranged downstream generate considerable noise due to the mutual sliding of the bars.

This leads to noise pollution which is particularly unpleasant for the operators who are in the vicinity of the magazine.

As mentioned, the fact of having to continuously load fresh bars into the magazine does not allow to provide an adequate soundproofing enclosure, since such enclosure would have to be removed continuously in order to replenish the bars in the respective compartments of the magazine.

The aim of the present invention is to provide a bar loading magazine which allows to fully utilize the capacity of the compartments of the magazine, regardless of the height that the bars can assume once they are gradually fed to the cropping machine arranged downstream.

Within this aim, an object of the present invention is to provide a bar loading magazine in which the operator can, at any moment of the feeding of the bars to the downstream machine, access the bars regardless of the number of bars that may have remained in the respective compartments of the magazine.

Another object of the present invention is to provide a bar loading magazine which minimizes the machine downtimes due to the loading of the bars in the magazine.

Another object of the present invention is to provide a bar loading magazine which allows to increase the productivity of the cropping machine arranged downstream of the magazine and fed by the bars loaded in said magazine.

Another object of the present invention is to provide a bar loading magazine whose dimensions are similar to those of conventional magazines.

Another object of the present invention is to provide a bar loading magazine which can be soundproofed, thus reducing to a minimum the noise pollution of the surrounding environment.

Another object of the present invention is to provide a bar loading magazine which is highly reliable, relatively simple to manufacture and at competitive costs.

This aim and these and other objects which will become better apparent hereinafter are achieved by a bar loading magazine, particularly for feeding cropping machines arranged downstream of said magazine, comprising a supporting element which is divided into a plurality of loading compartments, characterized in that at least one of said loading compartments is provided with supporting means for the bars which have means for maintaining said supporting means at a height, inside said compartment, which allows the operator to easily access the bars supported by said supporting means, as said bars are gradually unloaded from said supporting means.

Further characteristics and advantages of the invention will become better apparent from the description of preferred but not exclusive embodiments of the magazine according to the present invention, illustrated only by way of non-limitative example in the accompanying drawings, wherein:
Figure 1 is a perspective view of the magazine according to the present invention, in accordance with a first general embodiment;
Figure 2 is a lateral elevation view of a detail of a first embodiment of one of the compartments of the magazine according to the present invention;
Figure 3 is a view, similar to Figure 2, of a second embodiment of the magazine according to the present invention;
Figure 4 is a view, similar to Figure 2, of a third embodiment of the magazine according to the present invention;
Figure 5 is a view, similar to Figure 2, of a fourth embodiment of the magazine according to the present invention;
Figure 6 is a view, similar to Figure 2, of a fifth embodiment of the magazine according to the present invention;
Figure 7 is a view, similar to Figure 2, of a sixth embodiment of the magazine according to the present invention; and
Figure 8 is a perspective view of the soundproofing enclosure applied to the magazine according to the present invention.

With reference to the figures, the magazine according to the present invention, generally designated by the reference numeral 1, comprises a supporting element 2 which is substantially rectangular and is divided into a plurality of compartments 3 being delimited by uprights 3a, each compartment being suitable to contain a plurality of bars to be fed to a cropping and bending machine arranged downstream of the magazine.

In detail, the bars, designated by the reference numeral 4, are for example metal bars.

The particularity of the invention resides in that the bars are supported by at least one supporting element, preferably for example a cradle-shaped supporting element 5, slidingly arranged on two uprights 3a of a compartment 3 of the magazine 1, said cradle-like supporting element being conveniently provided with lifting means which are adapted to keep the supporting plane of the cradle-like supporting element at a height which always allows an operator to access easily, from the outside of the magazine, the bars supported by the cradle-like element 5.

Conveniently, each compartment or channel 3 can have a plurality of cradle-like supporting elements 5, each of which can slide along a respective pair of uprights 3a.

In detail, as shown in Figure 2, the lifting means for keeping the cradle-like element 5 at an appropriate height within the respective compartment 3 of the magazine 1 are constituted, in a first embodiment, by elastic means 6, for example by one or more spring, being interposed between the cradle-like element 5 and the rectangular supporting element 2, which constitutes the magazine.

This solution allows to lift the cradle-like element 5 by gravity, as the bars 4 are unloaded from the cradle-like supporting element 5. In this manner, the bottom surface 8 of the cradle-like supporting element 5 is always at a height which allows an operator being adjacent to the magazine to access the bars 4 supported by the cradle-like supporting element 5.

Figure 3 illustrates a second embodiment, in which the lifting means for maintaining the height of the cradle-like supporting element 5 is constituted, for example, by a gearmotor 9 which actuates a ballscrew 10 which is thus adapted to keep the bottom surface 8 of the cradle-like supporting element 5 always at a constant height which allows the operator to access the bars 4.

Figure 4 is a view of a third embodiment of the lifting means for maintaining the height of the magazine according to the invention. In this embodiment, the height maintaining means provides for a hydraulic system with at least one piston 11 actuated by a motor 12 by way of pressurized fluids.

Figure 5 is a view of a fourth embodiment of the height maintaining lifting means for the magazine according to the invention, in which there are one or more pneumatic pistons 13 actuated by a compressor 14.

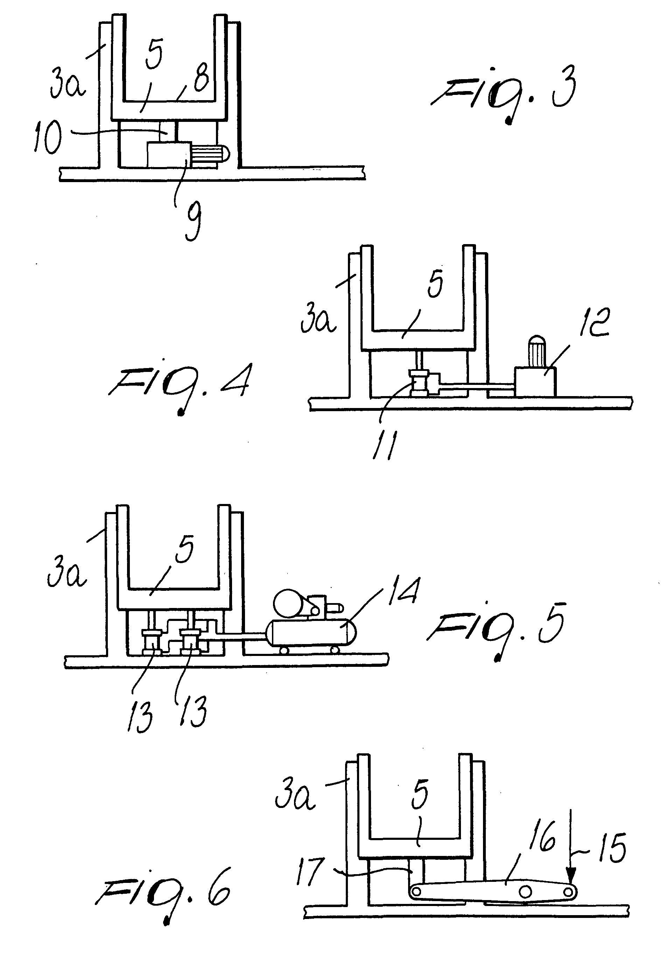

Figure 6 is a view of a fifth embodiment of the height maintaining lifting means, which in this case can be provided by an external piston 15 which, by means of an appropriate lever 16, acts on an arm 17 or on multiple arms 17 arranged under the cradle-like element 5.

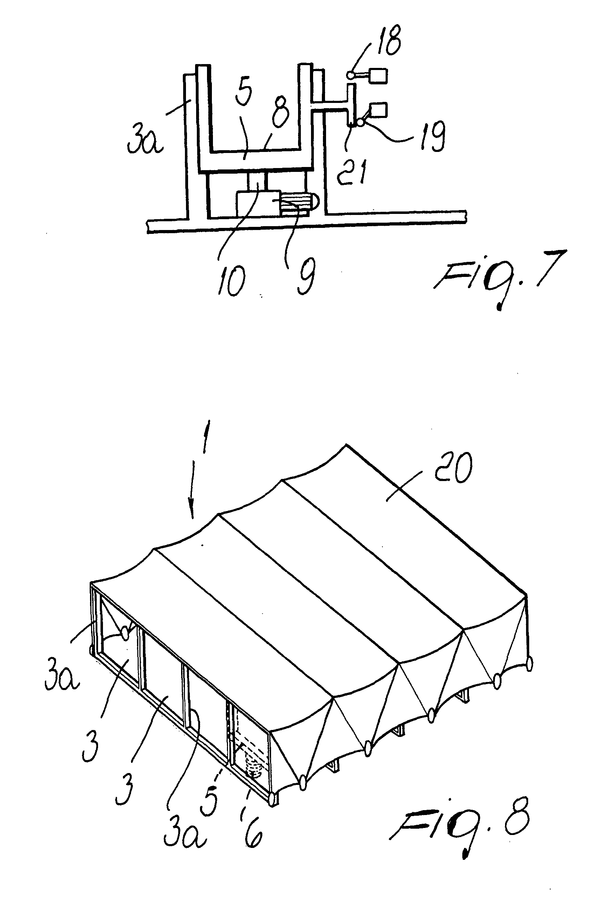

Finally, Figure 7 illustrates an embodiment for controlling the upper stroke limit and optionally the lower stroke limit of the cradle-like element 5, which can be applied to any one of the embodiments illustrated in Figures 3 to 6.

In detail, the cradle-like supporting element 5 has an element 21 which protrudes therefrom and is suitable to make contact with upper stroke limit elements 18 and lower stroke limit elements 19 in order to stop the operation of the height maintaining means.

The stroke limiting element can also be of the mechanical type and can therefore be constituted by a stop element which prevents the cradle-like supporting element 5 from further rising.

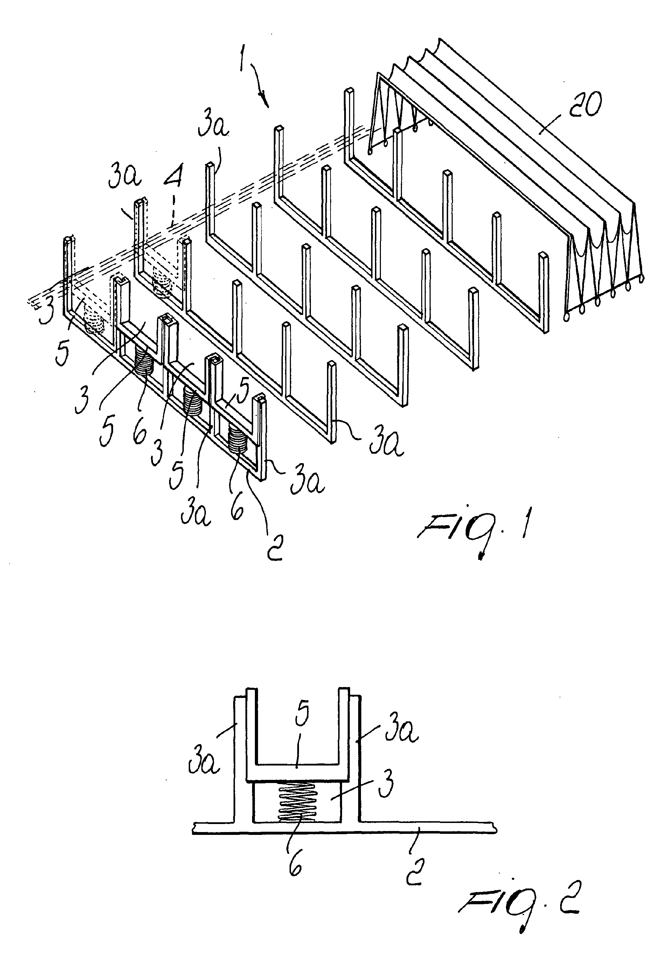

Moreover, as shown in Figures 1 and 8, the magazine according to the present invention can be provided with covering means 20 which is conveniently constituted for example by a covering element which can be folded up in an accordion-like fashion and can be unfolded over the surface of the magazine, as shown in Figure 8, so as to soundproof the loading compartments 3 for the bars 4. In this manner, extraction of the bars 4 from the compartments of the magazine, which generates very loud noise due to the mutual sliding of the bars, can be improved as regards the noise pollution that it produces in the surrounding environment.

The solution of covering the magazine 1 is possible thanks to the fact that the loading of the compartments 3 of the magazine with the bars to be extracted and fed to the machine arranged downstream is performed far less frequently than in conventional magazines.

The possibility to fully load the compartments 3 of the magazine 1 with a number of bars which completely fills the space formed by the compartment 3 in fact allows to replenish the bars in the magazine far less frequently. The possibility to fully load the compartments 3 is allowed, as explained earlier, by the fact that the operator can always make contact with the bars by way of the presence of the cradle-like supporting element 5, which moves vertically upward as the bars 4 are fed to the cropping and bending machine arranged downstream of the magazine.

Substantially, the loading to full capacity of all the compartments 3 with the bars 4 allows to increase considerably the operating capability of the machine arranged downstream, minimizing downtimes for loading the bars into the magazine, thereby increasing production and accordingly reducing the costs of the finished product.

In practice it has been observed that the magazine according to the invention fully achieves the intended aim and objects, since it allows to fully utilize the loading capacity of the respective compartments of the magazine, without the operator having disadvantages as regards easy access to the bars as they are fed to the machine and then unloaded from the magazine. Moreover, the supporting means can be applied to all existing magazine types and configurations.

The magazine thus conceived is susceptible of numerous modifications and variations, all of which are within the scope of the appended claims; all the details may further be replaced with other technically equivalent elements.

In practice, the materials used, so long as they are compatible with the specific use, as well as the dimensions, may be any according to requirements and to the state of the art.

The disclosures in Italian Patent Application No. MI2000A001187 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A bar loading magazine, particularly for feeding cropping machines arranged downstream of said magazine, comprising a supporting element (2) which is divided into a plurality of loading compartments (3), **characterized in that** said loading compartments (3) are provided with supporting means (5) for said bars (4) which has means (6,10,11,17) for maintaining said supporting means (5) at a height, inside said compartment (3), which allows the operator to easily access the bars (4) supported by said supporting means (5), as said bars (4) are gradually unloaded from said supporting means (5).

2. The magazine according to claim 1, **characterized in that** said means for maintaining the supporting means (5) at a constant height comprises one or more elastic means (6) which is interposed between said supporting means (5) and said supporting element (2).

3. The magazine according to claim 1, **characterized in that** said means for maintaining said supporting means (5) at a constant height within said compartment (3) comprises hydraulic means which is constituted by at least one hydraulic piston (11) and a corresponding motor (12), said piston (11) being interposed between said supporting means (5) and said supporting element (2).

4. The magazine according to claim 1, **characterized in that** said means for maintaining said supporting means at a constant height within said compartment comprises pneumatic means (13,14) which comprise at least one pneumatic piston (13) which is interposed between said supporting means (5) and said supporting element (2).

5. The magazine according to claim 1, **characterized in that** said means for maintaining said supporting means at a constant height within said compartment comprises at least one external piston (15) which is connected to a lever (16) and an arm (17), said arm (17) being arranged under said supporting means (5).

6. The magazine according to claim 1, **characterized in that** said supporting means has upper stroke limiting means (18,21).

7. The magazine according to claim 6, **characterized in that** said supporting means is provided with lower stroke limiting means (19,21).

8. The magazine according to claim 1, **characterized in that** it comprises means (20) for covering said compartments (3) which is adapted to provide soundproofing of said magazine (1).

9. The magazine according to claim 8, **characterized in that** said covering means (20) comprises at least one covering element (20) which can be folded in an accordion-like fashion and can be unfolded along said compartments (3) in the direction in which said bars (4) are extracted from said compartments (3).

10. The magazine according to one or more of the preceding claims, **characterized in that** each one of said compartments (3) is provided with one or more supporting means (5) which can slide vertically along respective pairs of vertical uprights (3a) which delimit each one of said compartments (3).
